(19) Europäisches Patentamt / European Patent Office / Office européen des brevets

(11) **EP 2 130 603 A2**

(12) **EUROPEAN PATENT APPLICATION**

(43) Date of publication:
**09.12.2009 Bulletin 2009/50**

(51) Int Cl.:
**B01J 35/04** *(2006.01)*     **B01J 29/00** *(2006.01)*
**B01D 53/92** *(2006.01)*     **F01N 3/00** *(2006.01)*

(21) Application number: **09006089.8**

(22) Date of filing: **04.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **20.05.2008  PCT/JP2008/059271**

(71) Applicant: **Ibiden Co., Ltd.**
**Ogaki-shi, Gifu 503-8604 (JP)**

(72) Inventors:
• **Ohno, Kazushige**
  **Ibi-Gun**
  **Gifu 501-0695 (JP)**

• **Kunieda, Masafumi**
  **Ibi-Gun**
  **Gifu 501-0695 (JP)**
• **Ido, Takahiko**
  **Ibi-Gun**
  **Gifu 501-0695 (JP)**

(74) Representative: **HOFFMANN EITLE**
**Patent- und Rechtsanwälte**
**Arabellastrasse 4**
**81925 München (DE)**

(54) **Honeycomb structure**

(57)    A honeycomb structure is disclosed that includes a honeycomb unit including zeolite and inorganic binder and having a shape in which a plurality of through holes extends in a longitudinal direction of the honeycomb unit, the through holes being separated from each other by interposing partition walls, in which an aperture ratio of a cross section perpendicular to the longitudinal direction is equal to or more than 50% and equal to or less than 65%, and when the cross section perpendicular to the longitudinal direction is divided into two areas, a center area and an outer peripheral area with a boundary line dividing the two areas, each point of the boundary line being equidistant from both a center and an outer peripheral of the cross section, the aperture ratio of the outer peripheral area is greater than the aperture ratio of the center area.

**FIG.1A**

EP 2 130 603 A2

**Description**

BACKGROUND OF THE INVENTION

1. Field of the Invention

The present invention relates to a honeycomb structure.

2. Description of the Related Art

Conventionally, an SCR (Selective Catalytic Reduction) system capable of converting NOx into nitrogen and water using ammonia has been known as a system converting exhaust gas from vehicles (based on the following formulas).

$$4NO+4NH_3+O_2 \rightarrow 4N_2+6H_2O$$

$$6NO_2+8NH_3 \rightarrow 7N_2+12H_2O$$

$$NO+NO_2+2NH_3 \rightarrow 2N_2+3H_2O$$

Further, in the SCR system, zeolite is a known material for adsorbing ammonia.
On the other hand, International Publication No. WO06/137149 discloses a honeycomb structure having a honeycomb unit including inorganic particles and at least one of inorganic fibers and whiskers, the inorganic particles being at least one selected from the group consisting of alumina, silica, zirconia, titania, ceria, mullite, and zeolite.
However, when a honeycomb structure using zeolite as a main material is used in the SCR system, most of exhaust gas flows through the center part of the honeycomb structure. Therefore, ammonia adsorbed to zeolite in the outer peripheral part of the honeycomb structure cannot effectively be used for NOx conversion, resulting in an insufficient NOx conversion rate.

SUMMARY OF THE INVENTION

The present invention is made in light of the above-described circumstances and may provide a honeycomb structure capable of improving the NOx conversion rate.
According to an aspect of the present invention, there is provided a honeycomb structure including a honeycomb unit including zeolite and inorganic binder and having a shape in which a plurality of through holes extends in a longitudinal direction of the honeycomb unit and the through holes are separated from each other by interposing partition walls, in which an aperture ratio of a cross section perpendicular to the longitudinal direction is equal to or more than 50% and equal to or less than 65%, and when a cross section perpendicular to the longitudinal direction is divided into two areas, a center area and an outer peripheral area, with a boundary line dividing the two areas each point of the boundary line being equidistant from both a center and an outer peripheral of the cross section, the aperture ratio of the outer peripheral area is greater than the aperture ratio of the center area.
Further preferably, the aperture ratio of the outer peripheral area is equal to or more than 55% and equal to or less than 65%.
Further preferably, the aperture ratio of the center area is equal to or more than 50% and equal to or less than 60%.
Further preferably, zeolite content per apparent volume in the honeycomb unit is equal to or more than 230 g/L and equal to or less than 270 g/L.
Further preferably, the zeolite is at least one selected from a group consisting of β-type zeolite, Y-type zeolite, ferrierite, ZSM-5type zeolite, mordenite, faujasite, zeolite A, and zeolite L.
Further preferably, in zeolite, a mole ratio of silica to alumina is equal to or more than 30 and equal to or less than 50.
Further preferably, the zeolite is ion-exchanged with at least one selected from a group consisting of Fe, Cu, Ni, Co, Zn, Mn, Ti, Ag, and V.
Further preferably, the zeolite includes secondary particles having an average particle diameter equal to or more than 0.5 $\mu$m and equal to or less than 10 $\mu$m.
Further preferably, the honeycomb unit further includes inorganic particles other than zeolite.
Further preferably, the inorganic particles are at least one selected from a group consisting of alumina, silica, titania, zirconia, ceria, mullite, and a precursor thereof, and the inorganic binder has solid content of at least one selected from a group consisting of alumina sol, silica sol, titania sol, water glass, sepiolite, and attapulgite.

Further preferably, the honeycomb unit further includes inorganic fibers, and the inorganic fibers are at least one selected from a group consisting of alumina, silica, silicon carbide, silica-alumina, glass, potassium titanate, and aluminum borate.

Further preferably, the honeycomb structure includes plural of the honeycomb units bonded to each other by interposing adhesive layers.

According to an embodiment of the present invention, there is provided a honeycomb structure capable of improving a NOx conversion rate in the SCR system.

BRIEF DESCRIPTION OF THE DRAWINGS

Other objects, features, and advantages of the present invention will become more apparent from the following description when read in conjunction with the accompanying drawings, in which:

FIG. 1A is a perspective view showing an exemplary honeycomb structure according to an embodiment of the present invention;
FIG. 1B is an enlarged view of a cross section of the honeycomb structure in FIG. 1A, the cross section being cut in the direction perpendicular to a longitudinal direction of the honeycomb structure;
FIG. 1C is a schematic view of a cross section of the honeycomb structure in FIG. 1A;
FIG. 2A is a schematic view of another example of a cross section of a honeycomb structure according to an embodiment of the present invention, the cross section being cut in the direction perpendicular to the longitudinal direction of the honeycomb structure;
FIG. 2B is a schematic view of still other example of a cross section of a honeycomb structure according to an embodiment of the present invention, the cross section being cut in the direction perpendicular to the longitudinal direction of the honeycomb structure;
FIG. 3A is a perspective view showing other example of a honeycomb structure according to an embodiment of the present invention;
FIG. 3B is a perspective view showing a honeycomb unit of the honeycomb structure in FIG. 3A; and
FIG. 4 is a drawing illustrating a method of measuring NOx conversion rate.

BEST MODE FOR CARRYING OUT THE INVENTION

In the following, best mode for carrying out the present invention is described with reference to the accompanying drawings.

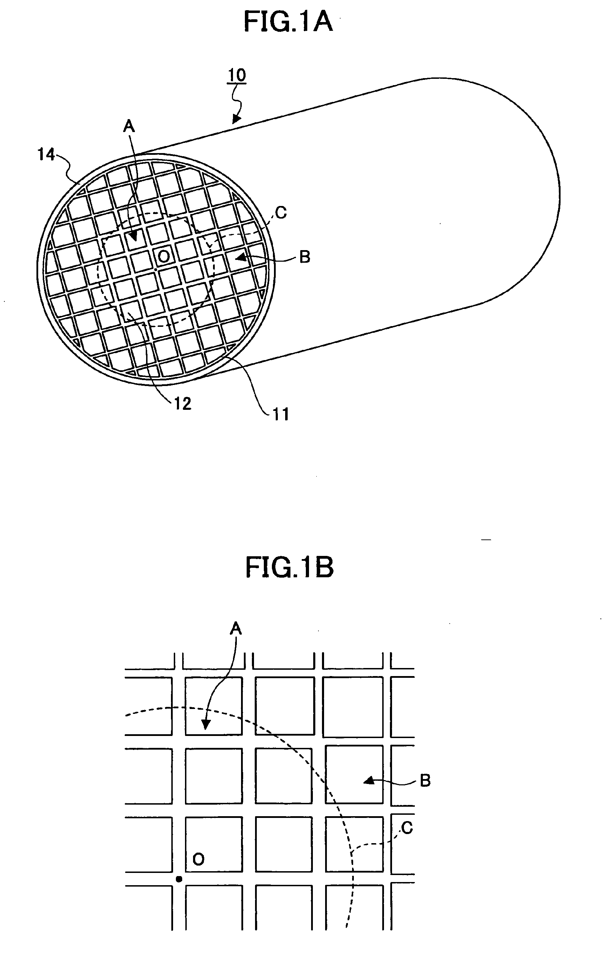

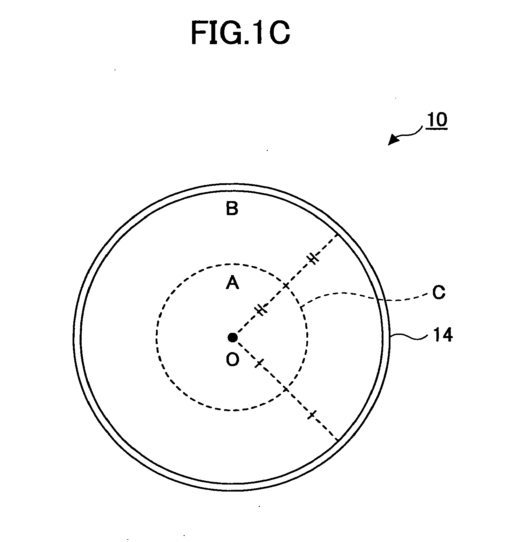

FIGS. 1A, 1B, 1C show an example of a honeycomb structure 10 according to an embodiment of the present invention. More specifically, FIG. 1A is a perspective view of the honeycomb structure 10; FIG. 1B is an enlarged view of a cross section of the honeycomb structure in FIG. 1A, the cross section being cut in the direction perpendicular to the longitudinal direction of the honeycomb structure; and FIG. 1C is a schematic view of the cross section the of the honeycomb structure in FIG. 1A. The honeycomb structure 10 includes a single honeycomb unit 11 and an outer peripheral coating layer 14. The honeycomb unit 11 includes zeolite and inorganic binder and has a shape in which plural through holes 12 separated from each other by partition walls extend along the longitudinal direction of the honeycomb structure 10. The outer peripheral coating layer 14 is formed on an outer surface of the honeycomb unit 11, the outer surface being extended along the longitudinal direction of the honeycomb structure 10. In this configuration, the aperture ratio (opening ratio) of the honeycomb unit 11 at a cross section perpendicular to the longitudinal direction of the honeycomb structure 10 is in a range from 50% to 65%, and preferably in a range from 55% to 60%. Further, when the cross section of the honeycomb structure 10 excluding the outer peripheral coating layer 14, i.e., the cross section of the honeycomb unit 11, is divided into two parts, a center area "A" and an outer peripheral area "B", so that each point of the boundary dividing the two parts is equidistant from both the center of the cross section and the outer peripheral of the cross section, the cross section being perpendicular to the longitudinal direction of the honeycomb structure 10, the aperture ratio of the outer peripheral area "B" is greater than that of the center area "A". Herein, the boundary dividing the center area "A" and the outer peripheral area "B" is called the boundary line "C" (see FIG. 1A). The honeycomb structure according to an embodiment of the present invention may include an outer peripheral coating layer on the peripheral surface. The term aperture ratio herein refers to an aperture ratio of the honeycomb structure excluding the outer peripheral coating layer when the honeycomb structure includes the outer peripheral coating layer On the other hand, when the honeycomb structure does not include the outer peripheral coating layer, the term aperture ratio herein refers to an aperture ratio of the honeycomb structure. In the same manner,

the terms the center area and the outer peripheral area are defined in the honeycomb structure excluding the outer peripheral coating layer when the honeycomb structure includes the outer peripheral coating layer. On the other hand, when the honeycomb structure does not include the outer peripheral coating layer, the terms the center area and the outer peripheral area are defined in the honeycomb structure. When the honeycomb structure 10 is used in an SCR system (such as an urea SCR system), more exhaust gas is likely to flow through not only the center area "A" but also the outer peripheral area "B". As a result, ammonia adsorbed by zeolite in the outer peripheral area "B" can be more effectively used for NOx conversion, thereby improving the NOx conversion rate.

When the aperture ratio of the cross section perpendicular to the longitudinal direction of the honeycomb unit 11 is less than 50%, a specific surface area of the honeycomb unit 11 becomes smaller and the partition walls become thicker. As a result, the chances of contact of the ammonia adsorbed by zeolite with NOx are reduced and therefore, zeolite cannot be effectively used for the NOx conversion. On the other hand, when the aperture ratio of the cross section perpendicular to the longitudinal direction of the honeycomb unit 11 is more than 65%, the strength of the honeycomb structure 10 becomes insufficient.

In the following, the honeycomb structure 10 is described in more detail. As shown in FIGS. 1A through 1C, the honeycomb unit 11 includes the center area "A" and the outer peripheral area "B" divided by the boundary line "C". In this case, each point on the boundary line "C" is equidistant from both the center of the cross section and the outer peripheral of the cross section, the cross section being perpendicular to the longitudinal direction of the honeycomb unit 11. Because of this feature, the boundary line "C" has a shape similar to that of the outer peripheral of the honeycomb unit 11. Further, the thickness of the partition walls in the center area "A" is greater than that in the outer peripheral area "B". In each of the same areas, the thickness of the partition walls (excluding the walls crossing the boundary line "C") is constant. In this case, the thickness of the partition walls crossing the boundary line "C" is the same as that of the partition walls in the center area "A".

The aperture ratios of the center area "A" and the outer peripheral area "B" may be obtained based on the corresponding areas excluding the through holes 12 and the partition walls that are crossing the boundary line "C".

In a honeycomb structure 10 according to an embodiment of the present invention, the thickness of the partition walls may change continuously or discontinuously in each of the center area "A" and the outer peripheral area "B". In a case where the thickness of the partition walls changes in the center area "A", it is preferable that the closer the partition wall is located to the center of the honeycomb structure 10, the thicker the partition wall becomes to make it easier to flow exhaust gas through the outer side area. Further, in a case where the thickness of the partition walls changes in the outer peripheral area "B", it is preferable that the closer the partition wall is located to the outer peripheral of the honeycomb structure 10, the thinner the partition wall becomes to make it easier to flow exhaust gas through the outer side area.

Further, in the honeycomb structure 10 according to an embodiment of the present invention, the thickness of the partition walls may be constant as long as the aperture ratio of the outer peripheral area "B" is greater than that of the center area "A". In this case, the density of the through holes 12 of the center area "A" is greater than that of the outer peripheral area "B".

The aperture ratio of the center area "A" is preferably in a range from 50% to 60%, and more preferably in a range from 55% to 60%. If the aperture ratio of the center area "A" is less than 50%, the specific surface area of the honeycomb unit 11 becomes smaller, resulting in that the chances of contact of the ammonia adsorbed by zeolite with NOx may be reduced, and the partition walls become thicker, resulting in that zeolite in the center area "A" may not be effectively used for the NOx conversion.

On the other hand, when the aperture ratio of the of the center area "A" is more than 60%, exhaust gas becomes more likely to flow through the center area "A" and therefore, the zeolite in the outer peripheral area "B" may not be effectively used for NOx conversion.

The aperture ratio of the outer peripheral area "B" is preferably in a range from 55% to 65%, and more preferably in a range from 60% to 65%. If the aperture ratio of the outer peripheral area "B" is less than 55%, it becomes more likely to concentrate the flow of exhaust gas passing though the center area "A", resulting in that zeolite in the outer peripheral area "B" may not be effectively used for the NOx conversion. On the other hand, if the aperture ratio of the outer peripheral area "B" is more than 65%, the strength of the honeycomb structure 10 becomes insufficient.

The ratio of the aperture ratio of the outer peripheral area "B" to the aperture ratio of the center area "A" is preferably in a range from 1.2 to 2.0. If the ratio of those two aperture ratios is less than 1.2, it becomes more likely to concentrate the flow of exhaust gas passing though the center area "A", resulting in that zeolite in the outer peripheral area "B" may not be effectively used for the NOx conversion. On the other hand, if the ratio of those two aperture ratios is more than 2.0, the strength of the honeycomb unit 11 may become insufficient.

In the honeycomb unit 11, zeolite content per apparent volume is preferably in a range from 230 g/L to 270 g/L. If the zeolite content per apparent volume is less than 230 g/L, it may become necessary to increase the apparent volume to obtain sufficient NOx conversion rate. On the other hand, if the zeolite content per apparent volume is more than 270 g/L, the strength of the honeycomb unit 11 may become insufficient. Herein, the apparent volume of the honeycomb unit refers to a volume including the through holes.

The zeolite may include but is not limited to β-type zeolite, Y-type zeolite, ferrierite, ZSM-5type zeolite, mordenite, faujasite, zeolite A, zeolite L, and any combination thereof.

Preferably, in zeolite, the mole ratio of silica to alumina is in a range from 30 to 50.

Further, to enhance ammonia adsorption, zeolite may be ion-exchanged. The cationic species to be ion-exchanged include but are not limited to Fe, Cu, Ni, Co, Zn, Mn, Ti, Ag, V and the like and any combination thereof. The ion-exchanged amount is preferably in a range from 1.0 wt% to 10.0 wt%, and more preferably in a range from 1.0 wt% to 5.0 wt%. If the ion-exchanged amount is less than 1.0 wt%, the enhancement of ammonia adsorption by the ion-exchange may become insufficient. On the other hand, if the ion-exchanged amount is more than 10.0 wt%, the structure may become deformable upon being heated. To perform the ion-exchange with zeolite, zeolite may be dipped in water solution including the cation species.

Further, preferably, zeolite includes secondary particles. The average particle diameter of the secondary particles of the zeolite is preferably in a range from 0.5 $\mu$m to 10 $\mu$m. If the average particle diameter of the secondary particles of the zeolite is less than 0.5 $\mu$m, it is necessary to add a large amount of inorganic binder, resulting in that it may become difficult to perform extrusion molding of the honeycomb unit 11. On the other hand, if the average particle diameter of the secondary particles of the zeolite is more than 10 $\mu$m, the specific surface area of zeolite may become smaller, resulting in that the NOx conversion rate may be reduced.

Further, to reinforce the strength of the honeycomb unit 11, inorganic particles other than zeolite may be further added to the honeycomb unit 11. The inorganic particles other than zeolite may include but are not limited to alumina, silica, titania, zirconia, ceria, mullite, a precursor of one of the compounds, and any combination thereof. Among them, particularly, alumina, or zirconia may be more preferably used.

The average particle diameter of the inorganic particles other than zeolite is preferably in a range from 0.5 $\mu$m to 10 $\mu$m. If the average particle diameter of the inorganic particles other than zeolite is less than 0.5 $\mu$m, it is necessary to add a large amount of inorganic binder, resulting in that it may become difficult to perform extrusion molding of the honeycomb unit 11. On the other hand, if the average particle diameter of the inorganic particles other than zeolite is more than 10 $\mu$m, the effect of enhancing the strength of the honeycomb unit 11 may become insufficient. The inorganic particles other than zeolite may include secondary particles.

Further, the ratio of the average particle diameter of the secondary particles of zeolite to the average particle diameter of the secondary particles of inorganic particles other than zeolite is preferably equal to or less than 1 and more preferably in a range from 0.1 to 1. If this ratio becomes more than 1, the effect of enhancing the strength of the honeycomb unit 11 may become insufficient.

The content of the inorganic particles other than zeolite in the honeycomb unit 11 is preferably in the range of 3 wt% to 30 wt%, and more preferably in the range of 5 wt% to 20 wt%. If this content is less than 3 wt%, the effect of enhancing the strength of the honeycomb unit 11 may become insufficient. On the other hand, if this content is more than 30 wt%, the content of zeolite in the honeycomb unit 11 is reduced, which may reduce the NOx conversion rate.

As the inorganic binder, solid content including but not limited to alumina sol, silica sol, titania sol, water glass, sepiolite, attapulgite, and any combination thereof may be used.

The content of inorganic binder in the honeycomb unit 11 is preferably in a range from 5 wt% to 30 wt%, and more preferably in a range from 10 wt% to 20 wt%. If the content of inorganic binder is less than 5 wt%, the strength of the honeycomb unit 11 may be reduced, and if the content of inorganic binder is more than 30 wt%, it may become difficult to mold the honeycomb unit 11.

To enhance the strength of the honeycomb unit 11, preferably, the honeycomb unit 11 further includes inorganic fibers.

As the inorganic fibers, any material as long as it can enhance the strength of the honeycomb unit 11 may be used. However, preferably, inorganic fibers may be but are not limited to alumina, silica, silicon carbide, silica-alumina, glass, potassium titanate, aluminum borate, and any combination thereof.

The aspect ratio of the inorganic fibers is preferably in a range from 2 to 1000, more preferably in a range from 5 to 800, and still more preferably in the range from 10 to 500. If the aspect ratio of the inorganic fibers is less than 2, the effect of enhancing the strength of the honeycomb unit 11 may be reduced. On the other hand, when the aspect ratio of the inorganic fibers is more than 1000, clogging or the like may occur during molding of the honeycomb unit 11 such as extrusion molding. Further, inorganic fibers may be broken during the molding of the honeycomb unit 11, thereby reducing the effect of enhancing the strength of the honeycomb unit 11.

The content of inorganic fibers in the honeycomb unit 11 is preferably in a range from 3 wt% to 50 wt%, and more preferably in a range from 5 wt% to 20 wt%. If the content of inorganic fibers is less than 3 wt%, the effect of enhancing the strength of the honeycomb unit 11 may be reduced and if the content of inorganic fibers is more than 50 wt%, zeolite content in the honeycomb unit 11 is reduced, which may reduce the NOx conversion rate.

In the honeycomb unit 11, the density of the through holes 12 on a cross section surface perpendicular to the longitudinal direction of the honeycomb unit 11 is preferably in the range of 15.5 units/cm$^2$ to 124 units/cm$^2$, and more preferably in the range of 31 units/cm$^2$ to 93 units/cm$^2$. If the density of the through holes 12 is less than 15.5 units/cm$^2$, it may become difficult to have contact between exhaust gas and zeolite, thereby reducing the NOx conversion rate of the honeycomb unit 11. On the other hand, if the density of the through holes 12 is more than 124 units/cm$^2$, a pressure loss of the honeycomb unit 11 may be increased.

The thickness of the partition walls separating the through holes 12 from one another in the honeycomb unit 11 is preferably in a range from 0.10 mm to 0.50 mm, and more preferably in a range from 0.15 mm to 0.35 mm. If the thickness of the partition walls is less than 0.10 mm, the strength of the honeycomb unit 11 may be reduced, and if the thickness of the partition walls is more than 0.50 mm, it may become difficult to introduce exhaust gas into inside of the partition walls and therefore, zeolite in the partition walls may not be effectively used for converting NOx.

The thickness of the outer peripheral coating layer 14 is preferably in a range from 0.1 mm to 2 mm. If the thickness of the outer peripheral coating layer 14 is less than 0.1 mm, the effect of enhancing the strength of the honeycomb structure 10 may become insufficient, and if the thickness is more than 2 mm, the zeolite content per volume in the honeycomb structure 10 is reduced and therefore, the NOx conversion rate of the honeycomb structure 10 may be reduced.

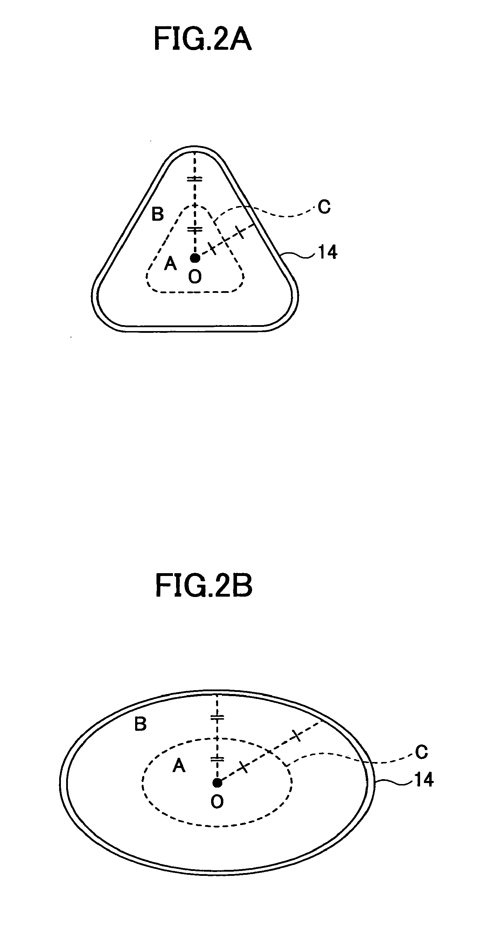

As shown in FIG. 1A, the shape of the honeycomb structure 10 is cylindrical. However, the shape of the honeycomb structure according to an embodiment of the present invention is not limited to this shape. For example, the honeycomb unit may have a shape such as a substantially triangular pillar shape (see FIG. 2A) and a substantially cylindroid shape (see FIG. 2B).

Further, the shape of the through hole 12 is an quadrangular pillar shape. However, the shape of the through hole 12 according to an embodiment of the present invention is not limited to this shape. For example, the through hole 12 may have a shape such as a substantially triangular pillar and a substantially hexagonal prism shape.

Next, an exemplary method of manufacturing the honeycomb structure 10 is described. First, molding such as extrusion molding is performed using raw material paste including zeolite and inorganic binder and further including, when necessary, inorganic particles other than zeolite, inorganic fibers and the like to form a raw honeycomb molded body having a cylindrical shape in which a plurality of through holes 12 extends in the direction parallel to the longitudinal direction of the honeycomb molded body and the through holes 12 are separated from each other by the interposing partition walls. By doing this, the honeycomb unit 11 having sufficient strength may be obtained even if the firing temperature is low. In this case, by changing the structure of a die for molding of the honeycomb unit 11, more specifically, by changing (adjusting) the thickness of the partition walls, the density of the through holes 12 and the like, it becomes possible to adjust the aperture ratio of the honeycomb unit 11.

As the inorganic binder, alumina sol, silica sol, titania sol, water glass, sepiolite, attapulgite and the like and any combination thereof may be added to the raw material paste.

Further, when necessary, organic binder, dispersion medium, molding aid and the like may be adequately added to the raw material paste.

The organic binder may be but is not limited to methylcellulose, carboxymethylcellulose, hydroxyethelcellulose, polyethyleneglycol, phenol resin, epoxy resin and the like and any combination thereof. The additive amount of the organic binder is preferably in a range from 1 wt% to 10 wt% with respect to the total weight of the compound including zeolite, inorganic particles other than zeolite, inorganic fibers, and inorganic binder.

The dispersion medium may be but is not limited to water, organic solvent such as benzene, alcohol such as methanol and the like and any combination thereof.

The molding aid may be but is not limited to ethylene glycol, dextrin, fatty acid, fatty acid soap, polyalcohol and the like and any combination thereof.

In preparing the raw material paste, it is preferable that the raw material paste be mixed and kneaded. An apparatus such as a mixer or an attritor may be used for the mixing, and an apparatus such as a kneader may be used for the kneading.

Next, the obtained honeycomb molded body is dried by using a drying apparatus such as a microwave drying apparatus, a hot air drying apparatus, a dielectric drying apparatus, reduced pressure drying apparatus, vacuum drying apparatus, and a freeze drying apparatus.

Further, the obtained honeycomb molded body is degreased. The degreasing conditions are not specifically limited and is are be selected in accordance with a kind or amount of organic substance included in the honeycomb molded body, but are preferably heating at a temperature of 400 °C for two hours.

Next, by firing the obtained honeycomb molded body, the honeycomb unit 11 having a cylindrical shape is obtained. The firing condition is not specifically limited but is preferably in the range from 600 °C to 1200 °C, and more preferably in the range from 600 °C to 1000 °C. If the firing temperature is less than 600 °C, the sintering may not adequately progress, thereby reducing the strength of the honeycomb unit 11. On the other hand, if the firing temperature is more than 1200 °C, excessive sintering may occur, and the reaction sites of zeolite may be reduced.

Next, a paste for forming the outer peripheral coating layer 14 is applied to the outer side surface of the cylindrical honeycomb unit 11. As the paste for the outer peripheral coating layer 14, a mixture of inorganic binder and inorganic particles, a mixture of inorganic binder and inorganic fibers, a mixture of inorganic binder, inorganic particles and inorganic fibers, or the like may be used, but the paste is not limited to those.

Further, organic binder may also be added to the paste for forming the outer peripheral coating layer. The organic binder may include but is not limited to polyvinyl alcohol, methylcellulose, ethylcellulose, carboxymethylcellulose, and any combination thereof. Among those organic binders, more preferably, carboxymethylcellulose is used.

Next, the honeycomb unit 11 to which the paste for the outer peripheral coating layer 14 is applied is dried and solidified to obtain the cylindrical honeycomb structure 10. In this case, when organic binder is included in the paste for the outer peripheral coating layer 14, preferably the obtained honeycomb molded body is degreased. The degreasing conditions are not specifically limited and are to be selected in accordance with a kind or amount of organic substance, but are preferably heating at a temperature of 400 °C for twenty minutes.

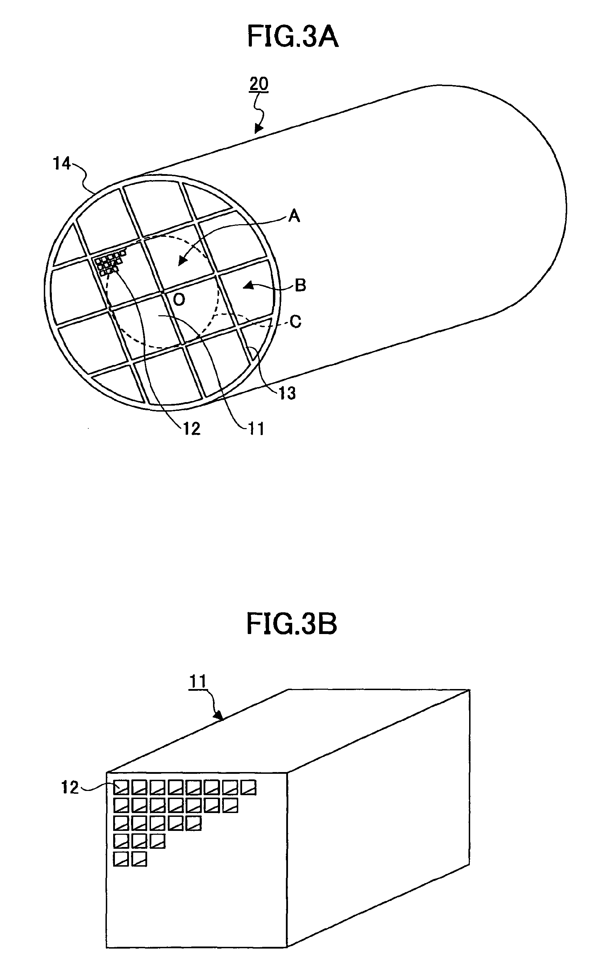

FIGS. 3A and 3B show other example of a honeycomb structure 20 according to other embodiment of the present invention. The honeycomb structure 20 is the same as the honeycomb structure 10 except that the honeycomb structure 20 includes plural of the honeycomb units 11 bonded to each other by intervening adhesive layers 13, each honeycomb unit 11 having a shape in which plural of the through holes 12 are extending in the direction parallel to the longitudinal direction of the structure 20 and separated from each other by the interposing partition walls.

A cross-sectional area perpendicular to the longitudinal direction of the honeycomb unit 11 is preferably in a range of 5 $cm^2$ to 50 $cm^2$. If the cross-sectional area is less than 5 $cm^2$, the specific surface area of the honeycomb structure 10 may be reduced and also the pressure loss of the honeycomb structure 10 may be increased. On the other hand, if the cross-sectional area exceeds 50 $cm^2$, the strength against the thermal stress produced in the honeycomb unit 11 may become insufficient.

The thickness of the adhesive layer 13 for bonding the honeycomb units 11 is preferably in a range from 0.5 mm to 2 mm. If the thickness of the adhesive layer 13 is less than 0.5 mm, the bonding strength may become insufficient. On the other hand, if the thickness of the adhesive layer 13 is more than 2 mm, the specific surface area of the honeycomb structure 10 may be reduced and the pressure loss of the honeycomb structure 10 may be increased.

In FIGS. 3A and 3B, each honeycomb unit 11 has a quadrangular pillar shape. However, the shape of the honeycomb unit 11 according to an embodiment of the present invention is not limited to this shape. For example, the honeycomb unit 11 may have any shape such as a substantially hexagonal pillar shape as long as plural honeycomb units 11 may be easily bonded to each other.

Next, an exemplary method of manufacturing the honeycomb structure 20 is described. First, similar to the method of manufacturing the honeycomb unit 11 of the honeycomb structure 10, plural of the honeycomb units 11 having a quadrangular pillar shape are manufactured. In this case, the honeycomb units 11 for the center area "A", outer peripheral area "B", and the area including the boundary line "C" are manufactured. In this embodiment of the present invention, as the honeycomb units 11 for the area crossing the boundary line "C", the honeycomb units 11 for the center area "A" and/or the honeycomb units 11 for outer peripheral area "B" may be used.

Next, an adhesive paste is applied to the outer side surface of the honeycomb units 11 to bond the honeycomb units 11 one by one and the bonded honeycomb units 11 are dried and solidified to form an assembly of the honeycomb units 11. The formed assembly of the honeycomb units 11 is cut so that the assembly of the honeycomb units 11 has a cylindrical shape. Further, a polishing process may further be added. Otherwise, the honeycomb units 11 having a substantially fan-like and a substantially square shape are bonded to each other to form an assembly of honeycomb units 11 having a cylindrical shape.

The adhesive paste may include but is not limited to a mixture of inorganic binder and inorganic particles, a mixture of inorganic binder and inorganic fibers, a mixture of inorganic binder, inorganic particles and inorganic fibers, or the like.

The adhesive paste may further include organic binder. The organic binder may include but is not limited to polyvinyl alcohol, methylcellulose, ethylcellulose, carboxymethylcellulose, and any combination thereof.

Next, a paste for forming the outer peripheral coating layer 14 is applied to the outer side surface of the cylindrical assembly of the honeycomb units 11. The material of the paste for the outer peripheral coating layer 14 is not limited to but may be the same as or different from that of the adhesive paste. The composition of the paste for the outer peripheral coating layer 14 may be the same as that of the adhesive paste.

Next, the assembly of the honeycomb units 11 to which the paste for the outer peripheral coating layer 14 is applied is dried and solidified to obtain the honeycomb structure 20 having a cylindrical shape. In this case, when organic binder is added to the paste for the outer peripheral coating layer 14 and/or the adhesive paste, preferably the obtained honeycomb structure 20 is degreased. The degreasing conditions are not specifically limited and are to be selected in accordance with a kind or amount of organic substance, but are preferably heating at a temperature of 400 °C for twenty minutes.

Further, the honeycomb structures 10 and 20 may be manufactured in a manner so that after the honeycomb structure is manufactured out of a raw material paste in which zeolite has not been ion-exchanged, the manufactured honeycomb structure is dipped in water solution including cation species so that the zeolite is ion-exchanged.

Examples

Example 1

First, 2,250 g of β-type zeolite (ion-exchanged by 3 wt% of Cu, average particle diameter: 2 μm, mol ratio of silica to alumina: 40), 2,600 g of alumina sol (solid content: 20 wt%) as inorganic binder component, 550 g of γ-alumina (average particle diameter: 2 μm) as inorganic particles, 780 g of alumina fibers (average fiber diameter: 6 μm; average fiber length: 100 μm) as inorganic fibers, and 410 g of methylcellulose as organic binder were mixed and kneaded to obtain a raw material paste. The zeolite particles were ion-exchanged with Cu by being impregnated in copper nitrate water solution. The ion-exchanged zeolite amount was measured by IPC emission spectroscopic analysis using an ICPS-8100 (ICP emission spectrometer by SHIMADZU Corporation). Then, the raw material paste was extrusion molded by using an extrusion molding apparatus to obtain a raw honeycomb molded body having a cylindrical shape. Next, the raw honeycomb molded body was dried by using a microwave drying apparatus and a hot air drying apparatus, and degreased at a temperature of 400 °C for five hours and then fired at a temperature of 700 °C for five hours to obtain the honeycomb unit 11 having a cylindrical shape, a diameter of 143 mm, and a length of 150 mm. In the obtained honeycomb structure, the aperture ratio of a cross section perpendicular to the longitudinal direction of the honeycomb structure was 60% and the zeolite content per apparent volume was 250 g/L.

Further, in the center area "A" of the honeycomb unit 11, an aperture ratio "X" of the cross section perpendicular to the longitudinal direction of the honeycomb unit 11 was 57%, the density of the through holes 12 was 65 units/cm$^2$, and the thickness of the partition walls was 0.3 mm. Further, in the outer peripheral area "B" of the honeycomb unit 11, an aperture ratio "Y" of the cross section perpendicular to the longitudinal direction of the honeycomb unit 11 was 61%, the density of the through holes 12 was 65 units/cm$^2$, and the thickness of the partition walls was 0.27 mm. In this case, the ratio of the aperture ratio "Y" to the aperture ratio "X" was 1.07 (see Table 1 below). The boundary line "C" defining the boundary between the center area "A" and the outer peripheral area "B" was a circle having a distance of 71.5 mm from the center "O" of the cross section perpendicular to the longitudinal direction of the honeycomb unit 11, and the thickness of the partition walls crossing the boundary line "C" was the same as the thickness of the partition walls in the center area "A".

In this case, the aperture ratios "X" and "Y" were obtained by calculating the area of the through holes 12 of the center area "A" and the area of the outer peripheral area "B", respectively, of the honeycomb structure using an optical microscope. Further, thicknesses of the partition walls of the center area "A" and the outer peripheral area "B" of the honeycomb structure were obtained by averaging (five samples of) the measured thicknesses of the partition walls of the center area "A" and the outer peripheral area "B", respectively using an optical microscope. Further, the densities of the through holes 12 of the center area "A" and the outer peripheral area "B" of the honeycomb structure were obtained by counting the number of the through holes 12 of the center area "A" and the outer peripheral area "B", respectively, of the honeycomb structure using an optical microscope.

Next, 29 parts by weight of γ-alumina (average particle diameter: 2 μm) as inorganic particles, 7 parts by weight of alumina fibers (average fiber diameter: 6 μm, average fiber length: 100 μm) as inorganic fibers, 34 parts by weight of alumina sol (solid content: 20 wt%) as inorganic binder, 5 parts by weight of methylcellulose as organic binder, and 25 parts by weight of water were mixed and kneaded to obtain the paste for the outer peripheral coating layer 14.

Further, after the paste for the outer peripheral coating layer 14 was applied to the outer side surface of the honeycomb unit 11 so that the thickness of the outer peripheral coating layer 14 become 0.4 mm, the honeycomb structure was dried and solidified by using a microwave drying apparatus and a hot air drying apparatus, and degreased at a temperature of 400 °C for two hours to obtain the honeycomb structure 10 having a cylindrical shape, a diameter of 143.8 mm, and a length of 150 mm.

Examples 2 and 3, Comparative example 1

The honeycomb structures having a cylindrical shape, a diameter of 143.8 mm, and a length of 150 mm were manufactured in the same manner as in Example 1 except that the structure of the die of the extrusion molding apparatus was respectively changed (see Table 1).

Table 1

| | CENTER AREA "A" | | | OUTER PERIPHERAL AREA "B" | | | RATIO OF APERTURE RATIO "Y" TO APERTURE RATIO "X" | NO$_x$ CONVERSION RATE [%] |
|---|---|---|---|---|---|---|---|---|
| | APERTURE RATIO "X" [%] | DENSITY OF THROUGH HOLES [UNITS/cm$^2$] | THICKNESS OF PARTITION WALLS [mm] | APERTURE RATIO "Y" [%] | DENSITY OF THROUGH HOLES [UNITS/cm$^2$] | THICKNESS OF PARTITION WALLS [mm] | | |
| EXAMPLE 1 | 57 | 65 | 0.3 | 61 | 65 | 0.27 | 1.07 | 86 |
| EXAMPLE 2 | 54 | 76 | 0.3 | 62 | 76 | 0.24 | 1.15 | 87 |
| EXAMPLE 3 | 51 | 88 | 0.3 | 63 | 88 | 0.22 | 1.24 | 88 |
| EXAMPLE 4 | 51 | 88 | 0.3 | 63 | 47 | 0.25 | 1.24 | 88 |
| COMPARATIVE EXAMPLE 1 | 60 | 54 | 0.3 | 60 | 54 | 0.25 | 1.00 | 75 |

Example 4

Plural of the honeycomb units 11 each having a square pillar shape and size of 35 mm in height, 35 in width, and 150 mm in length were manufactured in the same manner as in Example 1. Then, a paste for the outer peripheral coating layer was applied to the outer side surfaces of the honeycomb units 11 and the honeycomb units 11 were bonded to each other and dried and solidified at a temperature of 120 °C to manufacture an assembly of the honeycomb units 11. Then, the assembly of the honeycomb units 11 was cut by using a diamond cutter so that the cut cross section is perpendicular to the longitudinal direction of the assembly and substantially symmetrical with respect to a point (point-symmetric) and the assembly has a diameter of 143 mm and a length of 150 mm. Further, the paste for the outer peripheral coating layer 14 used in Example 1 was applied to the outer side surface of the cut assembly of the honeycomb units 11 so that the thickness of the outer peripheral coating layer 14 become 0.4 mm. Then the assembly of the honeycomb units 11 was dried and solidified at a temperature of 120 °C by using a microwave drying apparatus and a hot air drying apparatus and degreased at a temperature of 400 °C for two hours to obtain the honeycomb structure 20 having a cylindrical shape, a diameter of 143.8 mm, and a length of 150 mm (see Table 1). The boundary line "C" defining the boundary between the center area "A" and the outer peripheral area "B" was a circle having a distance of 71.5 mm from the center "O" of the cross section perpendicular to the longitudinal direction of the honeycomb structure 20 excluding the outer peripheral coating layer 14, and the thickness of the partition walls crossing the boundary line "C" was the same as the thickness of the partition walls in the center area "A".

Measurement of NOx conversion rate

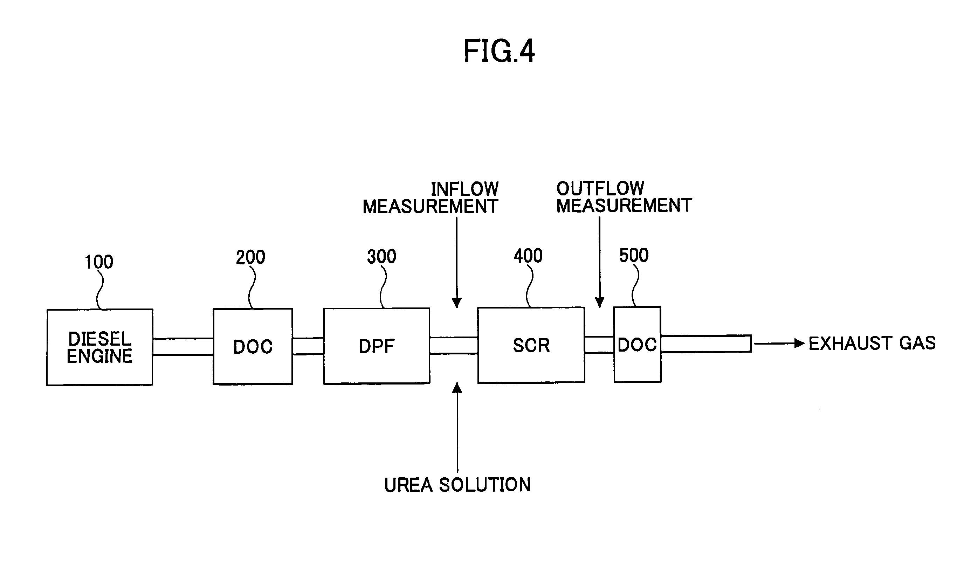

FIG. 4 shows a method of measuring NOx conversion rate. As shown in FIG. 4, a diesel engine (1.6 L direct injection engine) 100 is connected to a Diesel Oxidation Catalyst (DOC) 200, a Diesel Particulate Filter (DPF), an SCR 400, and a Diesel Oxidation Catalyst (DOC) 500 in series through exhaust pipes. In this configuration, the diesel engine 100 is operated at 3,000 rpm and 170 Nm torque, and a urea solution is injected into the exhaust pipe just before the SCR 400. Under this status, the amounts of nitric oxide (NO) and nitrogen dioxide (NO$_2$) flowing into the SCR 400 and flowing from the SCR 400 were measured by using MEXA-7500DEGR (exhaust analyzer by HORIBA LTD) and an NOx conversion rate [%] defined as in the following formula 1 was measured (detection limit: 0.1 ppm)

$$[\{(\text{inflow amount of NOx})-(\text{outflow amount of NOx})\}/(\text{inflow amount of Nox})]\times100 \qquad \text{formula 1}$$

In the configuration of FIG. 4, as the DOC 200, a honeycomb structure having a diameter of 143.8 mm, a length of 7.35 mm (available in market) with a sealing member (mat) disposed along its outer periphery housed in a metal shell was used. As the DPF 300, a honeycomb structure having a diameter of 143.8 mm, a length of 152.4 mm (available in market) with a sealing member (mat) disposed along its outer periphery housed in a metal shell was used. As the SCR 400, each of the honeycomb structures of Examples 1 through 4 and Comparative example 1 was used. As the DOC 500, a honeycomb structure having a diameter of 143.8 mm, a length of 50.8 mm (available in market) with a sealing member (mat) disposed along its outer periphery housed in a metal shell was used. The measurement results are shown in Table 1. As Table 1 shows, the NOx conversion rate of each of the honeycomb structures of Examples 1 through 4 is more superior than that of the honeycomb structure of Comparative example 1.

As described above, when a cross section perpendicular to the longitudinal direction of the honeycomb structure 10 is divided into two areas, i.e., the center area "A" and the outer peripheral area "B", so that each point of a boundary line dividing the two areas is equidistant from both the center of the cross section and the outer peripheral of the cross section, by making the aperture ratio of the outer peripheral area "B" greater than the aperture ratio of the center area "A", it may become possible to improve the NOx conversion rate of the honeycomb structure 10.

**Claims**

**1.** A honeycomb structure (10) including:

a honeycomb unit (11) including zeolite and inorganic binder and having a shape in which a plurality of through holes (12) extends in a longitudinal direction of the honeycomb unit (11), the through holes (12) being separated from each other by interposing partition walls, wherein

an aperture ratio of a cross section perpendicular to the longitudinal direction is equal to or more than 50% and equal to or less than 65%, and
when the cross section perpendicular to the longitudinal direction is divided into two areas, a center area (A) and an outer peripheral area (B), with a boundary line (C) dividing the two areas, each point of the boundary line (C) being equidistant from both a center and an outer peripheral of the cross section, the aperture ratio of the outer peripheral area (B) is greater than the aperture ratio of the center area (A).

2. The honeycomb structure (10) according to claim 1, wherein
the aperture ratio of the outer peripheral area (B) is equal to or more than 55% and equal to or less than 65%.

3. The honeycomb structure (10) according to claim 1 or 2 , wherein
the aperture ratio of the center area (A) is equal to or more than 50% and equal to or less than 60%.

4. The honeycomb structure (10) according to any one of claims 1 through 3, wherein
zeolite content per apparent volume in the honeycomb unit (11) is equal to or more than 230 g/L and equal to or less than 270 g/L.

5. The honeycomb structure (10) according to any one of claims 1 through 4, wherein
the zeolite is at least one selected from a group consisting of β-type zeolite, Y-type zeolite, ferrierite, ZSM-5type zeolite, mordenite, faujasite, zeolite A, and zeolite L.

6. The honeycomb structure (10) according to any one of claims 1 through 5, wherein
in the zeolite, a mole ratio of silica to alumina is equal to or more than 30 and equal to or less than 50.

7. The honeycomb structure (10) according to any one of claims 1 through 6, wherein
the zeolite is ion-exchanged with at least one selected from a group consisting of Fe, Cu, Ni, Co, Zn, Mn, Ag, and V.

8. The honeycomb structure (10) according to any one of claims 1 through 7, wherein
the zeolite includes secondary particles having an average particle diameter equal to or more than 0.5 $\mu$m and equal to or less than 10 $\mu$m.

9. The honeycomb structure (10) according to any one of claims 1 through 8, wherein
the honeycomb unit (11) further includes inorganic particles other than zeolite.

10. The honeycomb structure (10) according to claim 9, wherein
the inorganic particles are at least one selected from a group consisting of alumina, silica, titania, zirconia, ceria, mullite, and a precursor thereof.

11. The honeycomb structure (10) according to any one of claims 1 through 10, wherein
the inorganic binder has solid content of at least one selected from a group consisting of alumina sol, silica sol, titania sol, water glass, sepiolite, and attapulgite.

12. The honeycomb structure (10) according to any one of claims 1 through 11, wherein
the honeycomb unit (11) further includes inorganic fibers.

13. The honeycomb structure (10) according to claim 10, wherein
the inorganic fibers are at least one selected from a group consisting of alumina, silica, silicon carbide, silica-alumina, glass, potassium titanate, and aluminum borate.

14. The honeycomb structure (20) according to any one of claims 1 through 13, comprising:

plural of the honeycomb units (11) bonded to each other by interposing adhesive layers.

# FIG.1A

# FIG.1B

# FIG.1C

# FIG.2A

# FIG.2B

# FIG.3A

# FIG.3B

# FIG.4

INFLOW MEASUREMENT

OUTFLOW MEASUREMENT

100

200

300

400

500

DIESEL ENGINE → DOC → DPF → SCR → DOC → EXHAUST GAS

UREA SOLUTION

EP 2 130 603 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 06137149 A